# EUROPEAN PATENT APPLICATION

(11) **EP 4 407 938 A1**
(43) Date of publication of application: **31.07.2024**
(21) Application number: 22911653.8
(22) Date of filing: 23.11.2022
(51) Int. Cl.: H04L 12/40, H04L 1/00

(54) **CAN COMMUNICATION DEVICE SUPPORTING MODBUS PROTOCOL, AND OPERATION METHOD THEREFOR**

(30) Priority: 23.12.2021 KR 20210186534
(71) Applicant: LG Energy Solution, Ltd., Seoul 07335 (KR)
(72) Inventor: KIM, Hyun Jin, Daejeon 34122 (KR); LEE, Seung Min, Daejeon 34122 (KR); PARK, Chun Soo, Daejeon 34122 (KR); KANG, Ho Seok, Daejeon 34122 (KR)
(74) Representative: Plasseraud IP
(86) International application number: PCT/KR2022/018649
(87) International publication number: WO 2023/121017

(57) **Abstract**

A Controller Area Network (CAN) communication apparatus supporting the MODBUS protocol according to an embodiment includes a communication unit configured to receive or transmit a MODBUS data frame from or to a device and a controller configured to convert the MODBUS data frame into at least one CAN data frame including identification information or converting the CAN data frame into a MODBUS data frame. A CAN communication system using the communication apparatus of the embodiment supports the MODBUS communication protocol for inter-device communication so as to utilize the advantages of the MODBUS protocol, such as lightening the process, increasing data scalability, and providing standard documents free of charge.

## Description

### [TECHNICAL FIELD]

### CROSS-REFERENCE TO RELATED APPLICATION

This application claims priority to Korean Patent Application No. 10-2021-0186534, filed December 23, 2021, the entire contents of which is incorporated herein for all purposes by this reference.

### TECHNICAL FIELD

Embodiments disclosed in this document relate to a CAN communication apparatus supporting a MODBUS protocol and an operation method thereof.

### [BACKGROUND ART]

Recently, thanks to the development of autonomous driving technology and the development of electronic control systems, the automobile-related electronics industry has been rapidly growing. As electronic devices are used in various areas of automobiles, such as engine and drive control, multimedia playback, information processing for autonomous driving, and safety device control, communication technology for connecting electronic devices in a vehicle is also becoming important. In the past, all electronic devices were connected with dedicated wiring, but as the number of electronic devices in a vehicle increases and their functions become more complex, communication technologies and protocols capable of providing high bandwidth while reducing wiring complexity are required.

Controller Area Network (CAN) communication is a representative protocol for data transmission and reception between electronic devices in a vehicle. CAN communication is designed such that controllers or devices within a system can communicate with each other without a host computer, and thus has the advantage of being resistant to electrical noise and configuring a communication system at a low price. CAN communication apparatuses use standard protocols or user-defined communication protocols in most cases, and standard protocols are advantageous in terms of scalability but disadvantageous in terms of complexity, while user-defined protocols are simple but disadvantageous in terms of poor scalability. In particular, many industrial devices use the MODBUS protocol, which is lightweight and highly scalable and has standards for serial and TCP/IP communication but not for CAN communication, making it difficult to use them directly.

### [DISCLOSURE]

### [TECHNICAL PROBLEM]

It is an object of the embodiments disclosed in this document to provide a CAN communication apparatus supporting the MODBUS protocol and an operating method thereof.

The technical objects of the embodiments disclosed in this document are not limited to the aforesaid, and other objects not described herein with be clearly understood by those skilled in the art from the descriptions below.

### [TECHNICAL SOLUTION]

A CAN communication apparatus supporting a MODBUS protocol according to an embodiment includes a communication unit configured to receive a MODBUS data frame from a device and a controller configured to convert the MODBUS data frame into at least one CAN data frame each including identification information according to a transmission and reception type of the data frame and an order of constructing data.

In the CAN communication apparatus supporting a MODBUS protocol according to an embodiment, the MODBUS data frame may include a first data unit including address information, a second data unit including a function code, a third data unit including MODBUS message data, and a fourth data unit including a CRC value, and the at least one CAN data frame may include a fifth data unit including identification information of the CAN data frame, a sixth data unit including a function code, a seventh data unit including CAN message data, and an eighth data unit including a CRC value.

In the CAN communication apparatus supporting a MODBUS protocol according to an embodiment, the controller may be further configured to map the first data unit of the MODBUS data frame to a part of the fifth data unit of the CAN data frame, map the second data unit of the MODBUS data frame to the sixth data unit of the CAN data frame, map the third data unit of the MODBUS data frame to the seventh data unit of the CAN data frame, and map the fourth data unit of the MODBUS data frame to the eighth data unit of the CAN data frame.

In the CAN communication apparatus supporting a MODBUS protocol according to an embodiment, the controller may be further configured to map, in response to the third data unit exceeding in size a set value in mapping the third data unit to the seventh data unit, the excess of the third data unit to the seventh data unit of a new CAN data frame.

In the CAN communication apparatus supporting a MODBUS protocol according to an embodiment, the identification information of the CAN data frame may include at least one of address information mapped in the first data unit of the MODBUS data frame, information on the total number of frames of the at least one CAN data frame, sequence information of a currently transmitted frame among the at least one CAN data frame, requester identification information for identifying a device requesting the CAN data frame among one or more receiving devices, transmission and reception identification information for identifying whether the CAN data frame corresponds to the requested data frame, and transmission and reception type information of the CAN data frame.

A CAN communication apparatus supporting a MODBUS protocol according to an embodiment includes a controller configured to check sequence information of a CAN data frame transmitted through a CAN communication bus, initialize, in response to a sequence of the data frame being the first, a receive buffer and setting a receive flag based on information on a total number of frames, store, in response to the sequence of the CAN data frame being not the first, CAN message data of the CAN data frame while removing the receive flag corresponding to the sequence of the CAN data frame, and convert, in response to all the receive flags are removed, the stored CAN message data into a MODBUS data frame by sequentially mapping the CAN message data according to the sequence information; and a communication unit configured to transmit the MODBUS data frame to a device.

In the CAN communication apparatus supporting a MODBUS protocol according to an embodiment, the device may include a plurality of master devices or a plurality of slave devices.

An operation method of a controller area network (CAN) communication apparatus supporting a MODBUS protocol according to an embodiment may include receiving a MODBUS data frame from a first device and converting the MODBUS data frame into at least one CAN data frame each including identification information according to a transmission and reception type of the data frame and an order of constructing data.

In the operation method of the CAN communication apparatus supporting a MODBUS protocol according to an embodiment, the MODBUS data frame may include a first data unit including address information, a second data unit including a function code, a third data unit including MODBUS message data, and a fourth data unit including a CRC value, and the at least one CAN data frame may include a fifth data unit including identification information of the CAN data frame, a sixth data unit including a function code, a seventh data unit including CAN message data, and an eighth data unit including a CRC value.

In the operation method of the CAN communication apparatus supporting a MODBUS protocol according to an embodiment, the MODBUS data frame may include a first data unit including address information, a second data unit including a function code, a third data unit including MODBUS message data, and a fourth data unit including a CRC value, and the at least one CAN data frame may include a fifth data unit including identification information of the CAN data frame, a sixth data unit including a function code, a seventh data unit including CAN message data, and an eighth data unit including a CRC value.

In the operation method of the CAN communication apparatus supporting a MODBUS protocol according to an embodiment, converting the MODBUS data frame into at least one CAN data frame includes mapping the first data unit of the MODBUS data frame to a part of the fifth data unit of the CAN data frame, mapping the second data unit of the MODBUS data frame to the sixth data unit of the CAN data frame, mapping the third data unit of the MODBUS data frame to the seventh data unit of the CAN data frame, and mapping the fourth data unit of the MODBUS data frame to the eighth data unit of the CAN data frame.

In the operation method of the CAN communication apparatus supporting a MODBUS protocol according to an embodiment, mapping the third data unit to the seventh data unit may include mapping, in response to the third data unit exceeding in size a set value, the excess of the third data unit to the seventh data unit of a new CAN data frame.

In the operation method of the CAN communication apparatus supporting a MODBUS protocol according to an embodiment, the identification information of the CAN data frame may include at least one of address information mapped in the first data unit of the MODBUS data frame, information on the total number of frames of the at least one CAN data frame, sequence information of a currently transmitted frame among the at least one CAN data frame, requester identification information for identifying a device requesting the CAN data frame among one or more receiving devices, transmission and reception identification information for identifying whether the CAN data frame corresponds to the requested data frame, and transmission and reception type information of the CAN data frame.

The operation method of the CAN communication apparatus supporting a MODBUS protocol according to an embodiment may further include converting the at least one CAN data frame transmitted through the CAN communication bus into the MODBUS data frame and transmitting the MODBUS data frame to a second device.

In the operation method of the CAN communication apparatus supporting a MODBUS protocol according to an embodiment, converting the at least one CAN data frame to the MODBUS data frame may include checking sequence information of a CAN data frame, initializing, in response to a sequence of the data frame being the first, a receive buffer and setting a receive flag based on information on a total number of frames, storing, in response to the sequence of the CAN data frame being not the first, CAN message data of the CAN data frame while removing the receive flag corresponding to the sequence of the CAN data frame, and converting, in response to all the receive flags being removed, the stored CAN message data into the MODBUS data frame by sequentially mapping the CAN message data according to the sequence information.

In the operation method of the CAN communication apparatus supporting a MODBUS protocol according to an embodiment, converting the stored CAN message data into the MODBUS data frame by sequentially mapping the CAN message data according to the sequence information may include mapping a part of the fifth data unit of the CAN data frame to a part of the first data unit of the MODBUS data frame, mapping the sixth data unit of the CAN data frame to the second data unit of the MODBUS data frame, mapping the seventh data unit of the CAN data frame to the third data unit of the MODBUS data frame, and mapping the eighth data unit of the CAN data frame to the fourth data unit of the MODBUS data frame.

In the operation method of the CAN communication apparatus supporting a MODBUS protocol according to an embodiment, the first device or the second device may include a plurality of master devices or a plurality of slave devices.

### [ADVANTAGEOUS EFFECTS]

According to the above embodiments, it is possible to communicate using the MODBUS protocol in data transmission and reception between devices using CAN communication. The existing CAN communication method is disadvantageous in terms of complexity although advantageous in terms of scalability with standard protocols and disadvantageous in terms of scalability although advantageous in terms of being relatively simple with user-defined protocols. The CAN communication apparatus proposed in the embodiments can take advantages of the MODBUS protocol, such as lightening the process, increasing data scalability, and providing standard documents free of charge by supporting the MODBUS communication protocol.

In addition, various effects that can be directly or qualitatively identified through this document can be provided.

### [DESCRIPTION OF DRAWINGS]

In order to more clearly describe the embodiments disclosed in this document and the technical solutions of the prior art, drawings required in the description of the embodiments are briefly introduced below. It should be understood that the drawings below are for the purpose of explaining the embodiments of the present specification and not for limiting purposes. In the drawings, certain components may be exaggerated or omitted for clarity of description.
FIGS. 1A and 1B are block diagrams illustrating the configuration of a CAN communication apparatus supporting the MODBUS protocol according to an embodiment;
FIGS. 2A and 2B illustrate communication between a plurality of devices using a CAN communication apparatus supporting the MODBUS protocol according to an embodiment;
FIG. 3 is a flowchart illustrating an operation method of a CAN communication apparatus supporting the MODBUS protocol according to an embodiment;
FIG. 4 illustrates mapping of a MODBUS data frame to a CAN data frame at a transmitting end of a CAN communication apparatus according to an embodiment;
FIG. 5 illustrates a structure of identifier (ID) data of a CAN data frame according to an embodiment;
FIG. 6 illustrates mapping a MODBUS data frame to two or more CAN data frames in a transmitting end of a CAN communication apparatus according to an embodiment; and
FIG. 7 is a flowchart illustrating a procedure of converting a CAN data frame into a MODBUS data frame at a receiving end of a CAN communication apparatus according to an embodiment.

### [MODE FOR INVENTION]

Hereinafter, embodiments disclosed in this document will be described in detail with reference to exemplary drawings. In assigning reference numerals to the components of each drawing, it should be noted that the same components have the same reference numerals as much as possible even if they are displayed in different drawings. Detailed description of a well-known structure or function incorporated in the embodiments disclosed in this document may be omitted to avoid obscuring the understanding of the embodiments disclosed in this document.

Although the terms used in this document are selected, as much as possible, from general terms that are widely used at present while taking into consideration of the functions in the disclosure, these terms may be replaced by other terms based on intensions of those skilled in the art, customs, advent of new technologies, or the like. In addition, in a particular case, terms that are arbitrarily selected by the applicant may be used and, in this case, the meanings of these terms may be described in corresponding description parts of the invention. Accordingly, the terms used in this document should be construed on the basis of the practical meanings thereof and the overall content disclosed in this document rather than being simply construed based on names of the terms.

Terms used in this document are only used to describe a specific embodiment and may not be intended to limit the scope of other embodiments. The singular forms are intended to include the plural forms as well unless the context clearly indicates otherwise.

### Configuration of CAN communication apparatus supporting MODBUS protocol

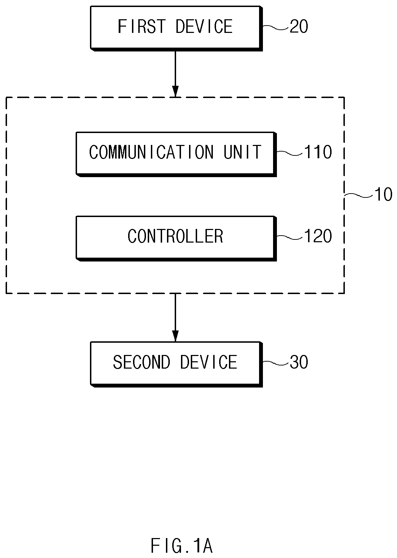

FIG. 1A is a block diagram illustrating the configuration of a CAN communication apparatus supporting the MODBUS protocol according to an embodiment.

With reference to FIG. 1A, the CAN communication apparatus 10 according to the embodiment includes a communication unit 110 configured to receive a MODBUS data frame from a first device 20 or transmit a MODBUS data frame to a second device 30 and a controller 120 configured to convert MODBUS data frames to CAN data frames or convert CAN data frames to MODBUS data frames. In this document, expressions such as "first" and "second" are used to distinguish components from each other and do not mean ranks or sequences between components.

The first device 20 and the second device 30 are devices designed to send and receive data through CAN communication and may be, for example, electronic devices in a vehicle, general or industrial PCs, embedded devices, etc., but are not limited thereto. Although not shown, each of the devices 20 and 30 may include a processor for processing data and a communication unit for communicating with other devices. The devices 20 and 30 may output or receive request/response message data as MODBUS data.

According to an embodiment, the first device 20 may be a master device requesting a response from another device, and the second device 30 may be a slave device receiving a request from another device and responding to the request. Conversely, the first device 20 may be a slave device and the second device 30 may be a master device.

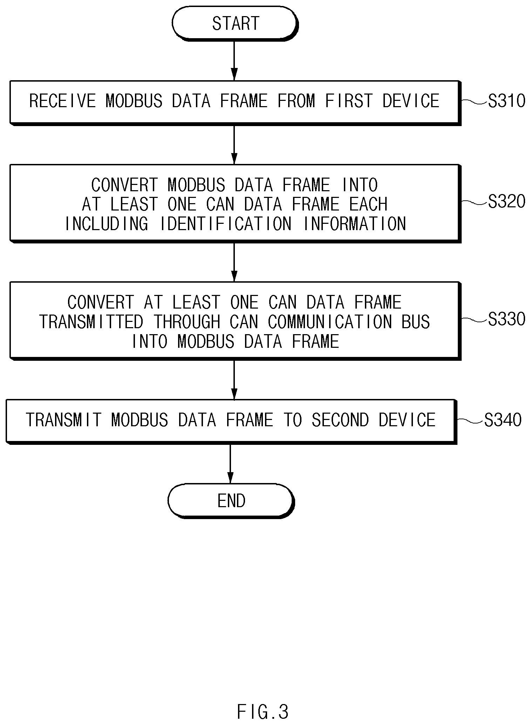

At the transmitting end of the device 10, the controller 120 converts the MODBUS data frame received from the first device 20 into at least one CAN data frame. A process of converting the MODBUS data frame into a CAN data frame by the controller 120 will be described later with reference to FIGS. 3 to 6.

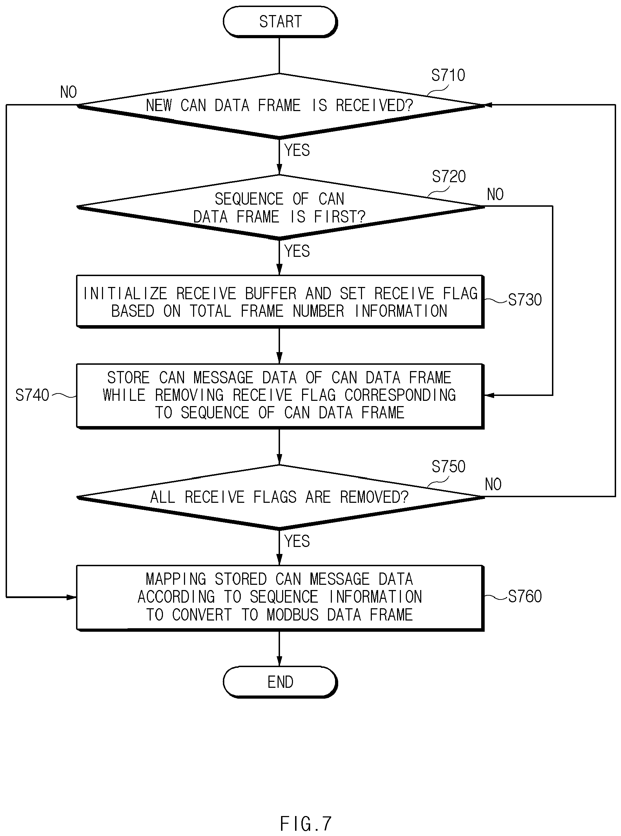

At the receiving end of the device 10, the controller 120 converts the at least one CAN data frame transmitted over the CAN communication bus into a MODBUS data frame. A process of converting the CAN data frame into the MODBUS data frame by the controller 120 will be described later with reference to FIG. 7.

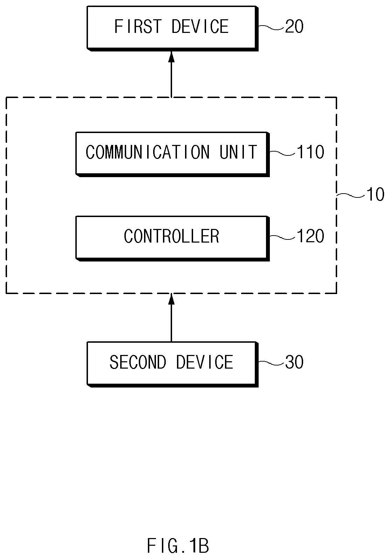

In the structure shown in FIG. 1A, the first device 20 operates as a transmit device for transmitting MODBUS data frames and the second device 30 operates as a receive device, but it is also possible to operate conversely. For example, in the structure shown in FIG. 1B, the first device 20 may operate as a receive device for receiving MODBUS data frames, and the second device 30 may operate as a transmit device. As such, each of the devices 20 and 30 is capable of transmitting and receiving data in both directions, and the communication apparatus 10 is capable of mutual conversion between a MODBUS data frame and a CAN data frame.

According to an embodiment, the first device 20 may be a plurality of master devices, and the second device 30 may be a plurality of slave devices. In this case, when one of the plurality of master devices requests a response from one of the slave devices, the communication unit 110 transmits a data frame to the slave device corresponding to the request through the CAN communication bus.

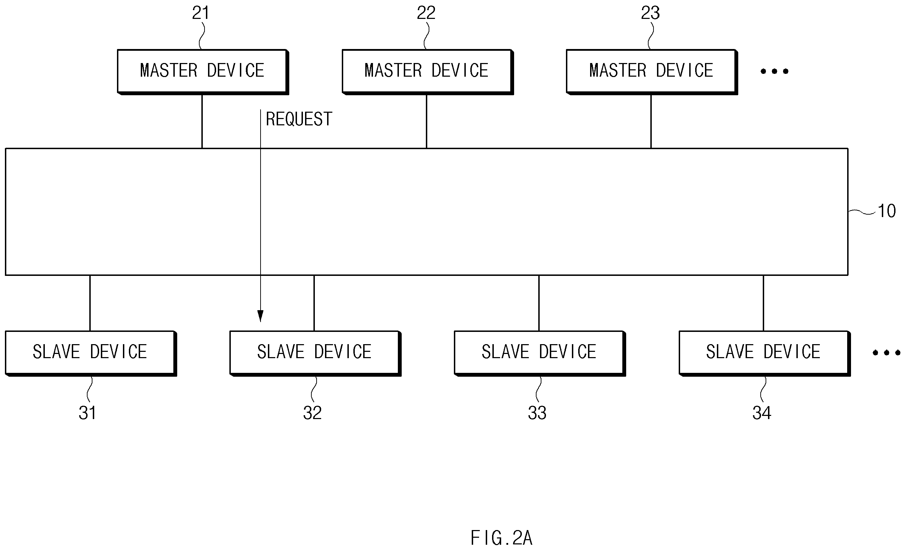

FIG. 2A illustrates communication between a plurality of devices using the CAN communication apparatus 10 supporting the MODBUS protocol according to an embodiment. With reference to FIG. 2A, there are a plurality of master devices 21, 22, 23, ... and a plurality of slave devices 31, 32, 33, 34, ..., and the CAN communication apparatus 10 relays communication between devices through interconversion of data frames.

For example, when the master device 21 requests a response from the slave device 32, the device 10 receives a MODBUS data frame from the master device 21 and converts it into a CAN data frame. In addition, the device 10 converts the CAN data frame transmitted through the CAN communication bus back into a MODBUS data frame and transmits it to the slave device 32.

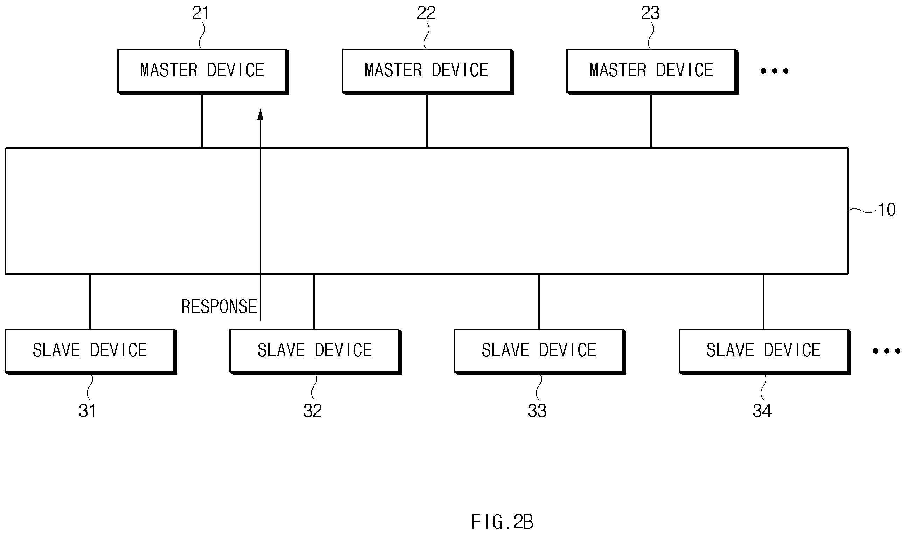

Contrary to FIG. 2A, FIG. 2B shows an operation in which the slave device 32 responds to the request of the master device 21. In this case, the device 10 receives the MODBUS data frame from the slave device 32 and converts it into a CAN data frame. In addition, the device 10 converts the CAN data frame transmitted through the CAN communication bus back into a MODBUS data frame and transmits it to the master device 21. In this way, the device may operate as a transmitting end or a receiving end according to the request and response of the device.

### Operation method of CAN communication apparatus supporting MODBUS protocol

Hereinafter, a method of operating a CAN communication apparatus supporting the MODBUS protocol will be described. The configuration of the CAN communication apparatus supporting the MODBUS protocol is as described with reference to FIGS. 1A, 1B, 2A, and 2B.

FIG. 3 is a flowchart illustrating an operation method of a CAN communication apparatus supporting the MODBUS protocol according to an embodiment.

With reference to FIG. 3, first, step S310 of receiving a MODBUS data frame from the first device is performed. Step S310 may be performed by the communication unit 110 of the device 10, and the first device 20 may be a master device requesting a response from another device or a slave receiving a request from another device and responding thereto.

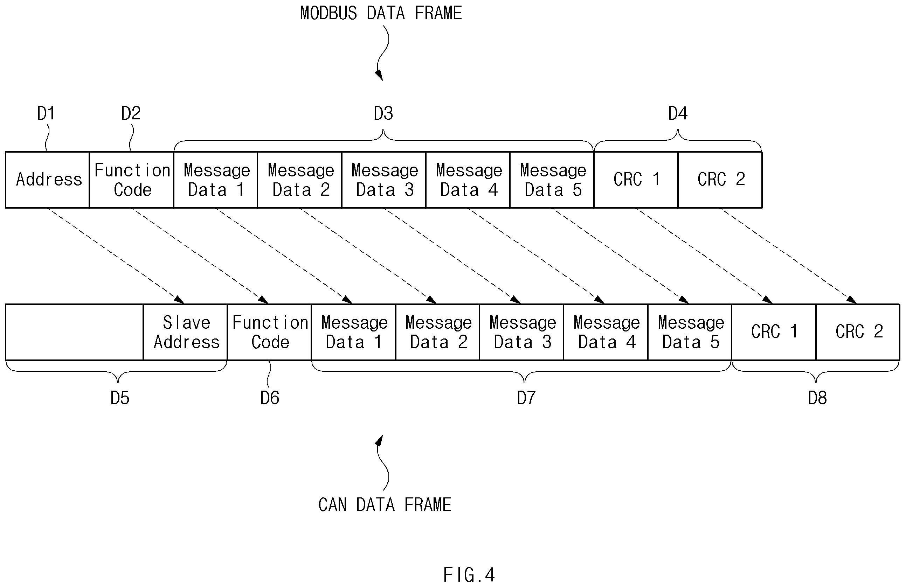

A MODBUS data frame has a structure conforming to the MODBUS communication protocol standard. FIG. 4 shows the structure of a MODBUS data frame according to an embodiment. With reference to FIG. 4, a MODBUS data frame may include a first data unit D1 including address information, a second data unit D2 including a function code, a third data unit D3 including MODBUS message data, and a fourth data unit D4 including a CRC value. For the function of each data area, the address information includes the IP addresses of the transmit device (e.g., the first device) and the receive device (e.g., the second device), and the function code is a command set code provided by the MODBUS protocol to read or write values to the device's memory. The MODBUS message data contains the contents of messages to be read and written. The CRC value is a check value for checking whether there is an error in the transmitted data when data is transmitted through a network according to a cyclic redundancy check method. An error can be detected by calculating a CRC value according to a given data value before transmitting data, appending the CRC value to the data, and calculating the CRC value again with the value of the received data after data transmission is finished, and comparing the two values.

With reference back to FIG. 3, step S320 of converting the MODBUS data frame into at least one CAN data frame is performed. Step S320 may be performed by the controller 120 of the device 10, and the controller 120 may appropriately convert data frames such that the data conforming to MODBUS protocol standards can be exchanged using the CAN communication bus.

FIG. 4 illustrates a mapping of a MODBUS data frame to a CAN data frame according to an embodiment. In this embodiment, the MODBUS message data (Message Data 1 to 5) of the third data unit D3 occupies 5 bytes.

With reference to FIG. 4, the CAN data frame includes a fifth data unit D5 including identification information of the CAN data frame, a sixth data unit D6 including a function code, a seventh data unit D7 including CAN message data, and an eighth data unit D8 including CRC values. The function of the data area (D5 to D8) is the same as that of the above-described data area (D1 to D4) of the MODBUS data frame and thus description thereof is omitted.

According to a specific embodiment, the first data unit D 1 of the MODBUS data frame is mapped to a part of the fifth data unit D5 of the CAN data frame, the second data unit D2 is mapped to the sixth data unit D5, the third data unit D3 is mapped to the seventh data unit D7, and the fourth data unit D4 is mapped to the eighth data unit D8. The fifth data unit D5 of the CAN data frame may further include identifier (ID) data for correctly identifying or receiving the data frame at the receiving end in addition to the address information (Slave Address) mapped from the first data unit D 1.

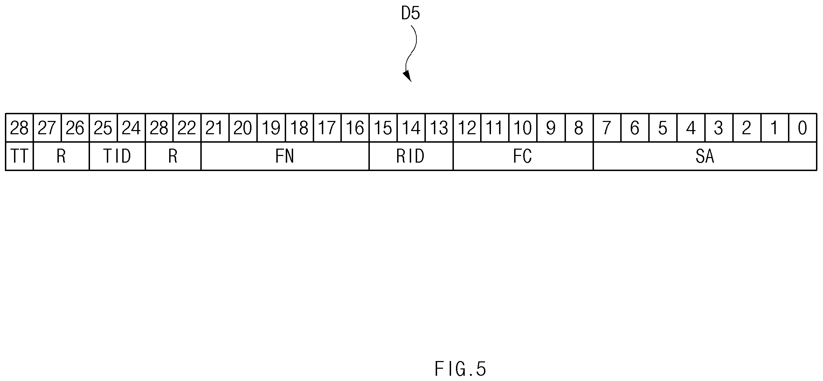

FIG. 5 illustrates the structure of identifier data (fifth data unit D5) of a CAN data frame according to an embodiment. In this embodiment, the fifth data unit D5 is composed of 29 bits (0 to 28 bits), and the abbreviation of the field corresponding to each bit is displayed in the table.

SA corresponding to bits 0 to 7 is a slave address and includes address information of requesting and responding devices.

FC corresponding to 8 to 12 bits is a frame count indicating, when two or more CAN data frames exist, the sequence of currently transmitted frames and may have a value between 0 and 31. For example, if FC=0, this indicates the first frame among two or more CAN data frames.

RID corresponding to bits 13 to 15 is requester identification information (Requester Identifier) for identifying a device requesting the CAN data frame and may have a value between 0 and 7. The RID is used, for example, as an identifier for a request in communication between multiple devices or in multiple processes within a single device. Communication between multiple MODBUS master devices and slave devices is possible using RID identification information.

FN corresponding to bits 16 to 21 is a frame number and represents the total number of CAN data frames according to MODBUS requests and responses and may have a value between 1 and 32. For example, when the number of MODBUS message data exceeds a set value and is converted into two or more CAN data frames, FN=2 means that there are two converted CAN data frames.

TID corresponding to bits 24 to 25 is a transaction identifier and represents transmission and reception identification information for identifying whether the CAN data frame corresponds to the requested data frame. For example, the slave device stores the TID included in the transmission data of the master device and returns it when responding, and the master device can check whether the currently received response frames correspond to the requested TID through the returned TID.

TT corresponding to bit 28 is a transaction type and represents transmission/reception type information of the CAN data frame. For example, it may be set to 0 in the case where the type of CAN data frame corresponds to a request from a master device and 1 in the case of corresponding to a response from a slave device. Using this, it is possible to easily identify the type of CAN data frame currently being transmitted or received.

Although the description is made with an exemplary case where the MODBUS message data (Message Data 1 to 5) of the MODBUS data frame is 5 bytes, if the message data exceeds the set value, it will be converted into two or more CAN data frames.

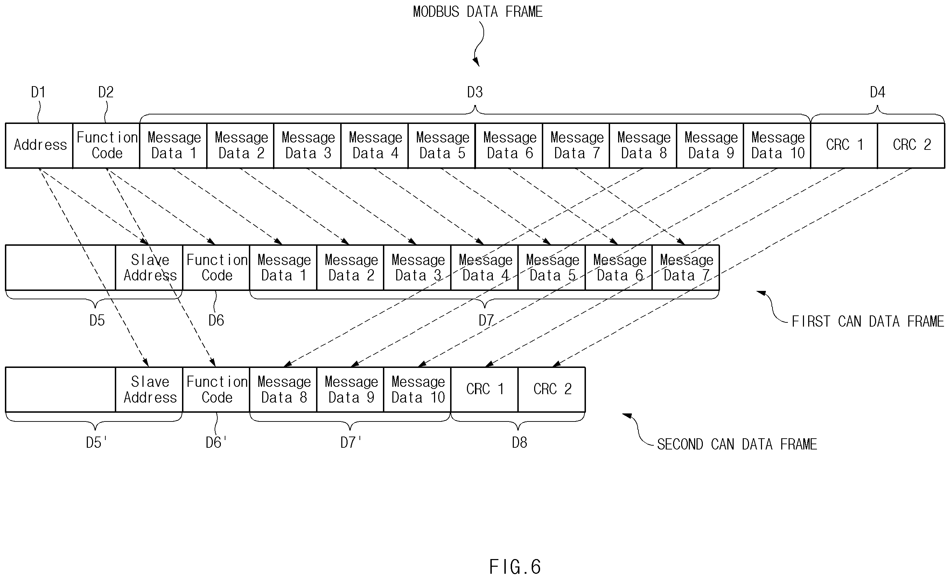

FIG. 6 illustrates mapping of a MODBUS data frame to two or more CAN data frames in the controller 120 of the CAN communication apparatus 10 according to an embodiment. In this embodiment, the MODBUS message data (Message Data 1 to 10) of the third data unit D3 occupies 10 bytes. According to an embodiment, the CAN data frame may be mapped to up to 10 bytes of data, and may include 7 bytes of data except for the fifth data unit D5 including identification information and address information and the sixth data unit D6 including a function code. Accordingly, only a part (Message Data 1 to 7) of the message data of 10 bytes are mapped to the seventh data unit (D7) of the first CAN data frame, and the message data (Message Data 8 to 10) exceeding the limit and CRC values are mapped to the seventh data unit (D7') and the eighth data unit (D8') of the new second CAN data frame, respectively.

In this case, the first and second CAN data frames each include identification information in the fifth data units D5 and D5', which is FN=2 and FC=0 of the first CAN data frame (the first of the two frames) and FN=2 and FC=1 of the second CAN data frame (the second of the two frames). Using the frame count (FC) identification information, it is possible to sequentially reconstruct a plurality of CAN data frames that are transmitted non-sequentially to convert the CAN data frames into MODBUS data frames.

According to another example, when the number of message data exceeds 14, the excess data may be mapped to a new third CAN data frame. In this case, the identification information is FN=3 and FC=0 in the first CAN data frame, FN=3 and FC=1 in the second CAN data frame, and FN=3 and FC=2 in the third CAN data frame.

With reference back to FIG. 3, step S320 is followed by step S330 of converting at least one CAN data frame transmitted through the CAN communication bus into a MODBUS data frame. Step S330 may be performed by the controller 120 of the device 10.

According to one embodiment, step S330 of converting the at least one CAN data frame into a MODBUS data frame may include checking the sequence information of CAN data frame; initializing, when the sequence of CAN data frame is the first, a receive buffer and setting a receive flag based on the total frame number information; storing, when the sequence of the CAN data frame is not the first, the CAN message data of the CAN data frame while removing the receive flag corresponding to the sequence of the CAN data frame; and converting, when all the receive flags are removed, the stored CAN message data into MODBUS data frames by sequentially mapping them according to the sequence information.

FIG. 7 is a flowchart illustrating a procedure of converting CAN data frames into MODBUS data frames according to an embodiment.

With reference to FIG. 7, first, it is checked at step S710 whether a new CAN data frame is received. The procedure goes, in response to receipt of a new CAN data frame (S710-->Yes), to the next step S720 and converts, in response to no receipt of a new CAN data frame (S710-->No), the CAN message data pre-stored in the receive buffer into MODBUS data at step S760 and ends.

Next, it is checked at step S720 whether the sequence of the CAN data frame is the first. When two or more CAN data frames exist, the sequence of the received frames may be determined based on the frame count (FC) value included in the identification information (refer to FIG. 5). If FC=0 in the received CAN data frame, this is the case where the data frame is the first data frame (S720→Yes), and thus the procedure goes to the next step S730 to initialize the receive buffer and set the receive flag based on the total frame count information. If FC≠0 in the received CAN data frame, this is the case where the data frame is not the first data frame (S720→No) and thus the procedure goes to step S740 without going through step S730 (i.e., without receive buffer initialization and flag setting).

Next, the CAN data frames are stored at step S740 while the receive flag corresponding to the sequence of the received CAN data frame (i.e., corresponding to the FC value) is removed.

Next, it is checked at step S750 whether all receive flags are removed. If all receive flags are removed (S750→Yes), this is the case where all one or more CAN data frames have been received, and thus the procedure goes to the next step S760. If there is any flag remaining (S750→No), this is the case where there is a remaining CAN data frame to be received, and thus the procedure returns to step S710 to receive a new CAN data frame.

If all CAN data frames are received, the CAN message data stored in the receive buffer is sequentially mapped according to the sequence information (FC value) and converted into MODBUS data frames at step S760. The conversion process is performed in the reverse order of conversion of the MODBUS data frame to the CAN data frame and may include, for example, mapping a part of the fifth data unit of the CAN data frame to a part of the first data unit of the MODBUS data frame, mapping the sixth data unit of the CAN data frame to the second data unit of the MODBUS data frame, mapping the seventh data unit of the CAN data frame to the third data unit of the MODBUS data frame, and mapping the eighth data unit of the CAN data frame to the fourth data unit of the MODBUS data frame.

According to steps S710 to S760, one or more CAN data frames may be sequentially reconstructed and converted into MODBUS data frames. In this way, it is possible to reconstruct the non-sequentially transmitted CAN data frames in the correct order using the FC values of the CAN data frames.

With reference back to FIG. 3, step S340 of outputting the MODBUS data frame to the second device is performed. Step S340 may be performed by the communication unit 110 of the device 10, and the second device 30, as a receiving device, may be a slave device receiving a request for a response from a master device or a master device receiving a response to a request from a slave device.

The operation method of the CAN communication apparatus supporting the MODBUS protocol according to the above embodiment is implemented as an application or in the form of program commands that can be executed through various computer components and recorded on a computer-readable recording medium. The computer-readable recording medium may include program instructions, data files, and data structures in individual or combined forms.

According to the above-described embodiment, it is possible to communicate using the MODBUS protocol in data transmission and reception between devices using CAN communication. The existing CAN communication method is disadvantageous in terms of complexity although advantageous in terms of scalability with standard protocols and disadvantageous in terms of scalability although advantageous in terms of being relatively simple with user-defined protocols. The CAN communication apparatus and operation method thereof proposed in the embodiment can take advantages of the MODBUS protocol, such as lightening the process, increasing data scalability, and providing standard documents free of charge by supporting the MODBUS communication protocol.

Although the above description has been made of the embodiment in which all components are combined or operate as one, there is no need to be limited to this embodiment, and one or more of all components may be selectively combined and operated within the scope of the purpose. Also, the terms such as "comprise", "include", or "have" used above imply that the corresponding component may be present unless otherwise stated specifically, and thus it should be construed as being able to further include other components rather than exclude other components.

The above description is only an illustrative example of the technical idea disclosed in this document, and those skilled in the art to which the embodiments disclosed in this document belong will be able to make various modification and changes without departing from the subject matter of the embodiments disclosed in this document. Therefore, the embodiments disclosed in this document are not intended to limit but to describe the technical idea disclosed in this document, and the scope of the technical idea disclosed in this document is not limited by this embodiment. The scope of protection of technical ideas disclosed in this document shall be construed by the following claims, and all technical ideas within the scope equivalent thereto shall be construed as being within the scope of the rights of this document.

## Claims

1. A CAN communication apparatus supporting a MODBUS protocol, the apparatus comprising:
a communication unit configured to receive a MODBUS data frame from a device; and
a controller configured to convert the MODBUS data frame into at least one CAN data frame each including identification information according to a transmission and reception type of the data frame and an order of constructing data.

2. The apparatus of claim 1, wherein the MODBUS data frame comprises a first data unit including address information, a second data unit including a function code, a third data unit including MODBUS message data, and a fourth data unit including a CRC value, and the at least one CAN data frame comprises a fifth data unit including identification information of the CAN data frame, a sixth data unit including a function code, a seventh data unit including CAN message data, and an eighth data unit including a CRC value.

3. The apparatus of claim 2, wherein the controller is further configured to map the first data unit of the MODBUS data frame to a part of the fifth data unit of the CAN data frame, map the second data unit of the MODBUS data frame to the sixth data unit of the CAN data frame, map the third data unit of the MODBUS data frame to the seventh data unit of the CAN data frame, and map the fourth data unit of the MODBUS data frame to the eighth data unit of the CAN data frame.

4. The apparatus of claim 3, wherein the controller is further configured to map, in response to the third data unit exceeding in size a set value in mapping the third data unit to the seventh data unit, the excess of the third data unit to the seventh data unit of a new CAN data frame.

5. The apparatus of claim 2, wherein the identification information of the CAN data frame comprises at least one of address information mapped in the first data unit of the MODBUS data frame, information on the total number of frames of the at least one CAN data frame, sequence information of a currently transmitted frame among the at least one CAN data frame, requester identification information for identifying a device requesting the CAN data frame among one or more receiving devices, transmission and reception identification information for identifying whether the CAN data frame corresponds to the requested data frame, and transmission and reception type information of the CAN data frame.

6. A CAN communication apparatus supporting a MODBUS protocol, the apparatus comprising:
a controller configured to check sequence information of a CAN data frame transmitted through a CAN communication bus, initialize, in response to a sequence of the data frame being the first, a receive buffer and setting a receive flag based on information on a total number of frames, store, in response to the sequence of the CAN data frame being not the first, CAN message data of the CAN data frame while removing the receive flag corresponding to the sequence of the CAN data frame, and convert, in response to all the receive flags are removed, the stored CAN message data into a MODBUS data frame by sequentially mapping the CAN message data according to the sequence information; and
a communication unit configured to transmit the MODBUS data frame to a device.

7. The apparatus of claim 6, wherein the MODBUS data frame comprises a first data unit including address information, a second data unit including a function code, a third data unit including MODBUS message data, and a fourth data unit including a CRC value, the CAN data frame comprises a fifth data unit including identification information of the CAN data frame, a sixth data unit including a function code, a seventh data unit including CAN message data, and an eighth data unit including a CRC value, and the controller is further configured to map a part of the fifth data unit of the CAN data frame to a part of the first data unit of the MODBUS data frame, map the sixth data unit of the CAN data frame to the second data unit of the MODBUS data frame, map the seventh data unit of the CAN data frame to the third data unit of the MODBUS data frame, and map the eighth data unit of the CAN data frame to the fourth data unit of the MODBUS data frame.

8. The apparatus of claim 1 or 6, wherein the device comprises a plurality of master devices or a plurality of slave devices.

9. An operation method of a controller area network (CAN) communication apparatus supporting a MODBUS protocol, the method comprising:
receiving a MODBUS data frame from a first device; and
converting the MODBUS data frame into at least one CAN data frame each including identification information according to a transmission and reception type of the data frame and an order of constructing data.

10. The method of claim 9, wherein the MODBUS data frame comprises a first data unit including address information, a second data unit including a function code, a third data unit including MODBUS message data, and a fourth data unit including a CRC value, and the at least one CAN data frame comprises a fifth data unit including identification information of the CAN data frame, a sixth data unit including a function code, a seventh data unit including CAN message data, and an eighth data unit including a CRC value.

11. The method of claim 10, wherein converting the MODBUS data frame into at least one CAN data frame comprises:
mapping the first data unit of the MODBUS data frame to a part of the fifth data unit of the CAN data frame;
mapping the second data unit of the MODBUS data frame to the sixth data unit of the CAN data frame;
mapping the third data unit of the MODBUS data frame to the seventh data unit of the CAN data frame; and
mapping the fourth data unit of the MODBUS data frame to the eighth data unit of the CAN data frame.

12. The method of claim 11, wherein mapping the third data unit to the seventh data unit comprises mapping, in response to the third data unit exceeding in size a set value, the excess of the third data unit to the seventh data unit of a new CAN data frame.

13. The method of claim 10, wherein the identification information of the CAN data frame comprises at least one of address information mapped in the first data unit of the MODBUS data frame, information on the total number of frames of the at least one CAN data frame, sequence information of a currently transmitted frame among the at least one CAN data frame, requester identification information for identifying a device requesting the CAN data frame among one or more receiving devices, transmission and reception identification information for identifying whether the CAN data frame corresponds to the requested data frame, and transmission and reception type information of the CAN data frame.

14. The method of claim 13, further comprising:
converting the at least one CAN data frame transmitted through the CAN communication bus into the MODBUS data frame; and
transmitting the MODBUS data frame to a second device.

15. The method of claim 14, wherein converting the at least one CAN data frame to the MODBUS data frame comprises:
checking sequence information of a CAN data frame;
initializing, in response to a sequence of the data frame being the first, a receive buffer and setting a receive flag based on information on a total number of frames;
storing, in response to the sequence of the CAN data frame being not the first, CAN message data of the CAN data frame while removing the receive flag corresponding to the sequence of the CAN data frame; and
converting, in response to all the receive flags being removed, the stored CAN message data into the MODBUS data frame by sequentially mapping the CAN message data according to the sequence information.

16. The method of claim 15, wherein converting the stored CAN message data into the MODBUS data frame by sequentially mapping the CAN message data according to the sequence information comprises:
mapping a part of the fifth data unit of the CAN data frame to a part of the first data unit of the MODBUS data frame;
mapping the sixth data unit of the CAN data frame to the second data unit of the MODBUS data frame;
mapping the seventh data unit of the CAN data frame to the third data unit of the MODBUS data frame; and
mapping the eighth data unit of the CAN data frame to the fourth data unit of the MODBUS data frame.

17. The method of claim 14, wherein the first device or the second device comprises a plurality of master devices or a plurality of slave devices.
